# EUROPÄISCHE PATENTSCHRIFT

(11) **EP 2 137 703 B1**
(45) Veröffentlichungstag und Bekanntmachung des Hinweises auf die Patenterteilung: **07.12.2011**
(21) Anmeldenummer: 08718214.3
(22) Anmeldetag: 26.03.2008
(51) Int. Cl.: G07C 7/00, H05K 5/02

(54) **DETEKTIONSVORRICHTUNG**
DETECTION DEVICE
DISPOSITIF DE DÉTECTION

(30) Priorität: 13.04.2007 DE 102007017893
(43) Veröffentlichungstag der Anmeldung: 30.12.2009
(73) Patentinhaber: Continental Automotive GmbH, 30165 Hannover (DE)
(72) Erfinder: GERBER, Rudolf, 78126 Königsfeld (DE); LINDINGER, Andreas, 78658 Flözlingen (DE); ROMBACH, Gerhard, 78098 Triberg (DE)
(86) Internationale Anmeldenummer: PCT/EP2008/053538
(87) Internationale Veröffentlichungsnummer: WO 2008/125441

(56) Entgegenhaltungen:
- EP-A- 0 142 013
- DE-A1- 10 128 305
- FR-A- 2 681 134
- US-A- 4 156 286
- US-A1- 2004 189 466

## Beschreibung

Die Erfindung betrifft eine Detektionsvorrichtung zum sicheren Erkennen eines Öffnens eines Gehäuses.

In der EP 1 622 095 A1 ist eine Registriervorrichtung für Kontroll- und/oder Überwachungszwecke offenbart. Ein Gehäuse, das mehrere Teile umfasst, umschließt und schützt in einem Gehäuseinneren angeordnete zu schützende Komponenten. Sicherheitsetiketten sind an Verbindungsbereichen von Teilen des Gehäuses angebracht. Die Sicherheitsetiketten dienen als Siegel, die sicherstellen, dass das Öffnen des Gehäuses erkennbar ist.

Jedoch ist das Öffnen des Gehäuses nur durch Begutachtung der Siegel durch eine Person erkennbar. Dies führt dazu, dass die zu schützenden Komponenten und die gegebenenfalls durch diese aufgezeichneten Daten vollständig als nicht mehr vertrauenswürdig eingestuft werden müssen. Ein Zeitpunkt des Öffnens des Gehäuses ist nicht nachvollziehbar.

In US 2004/0189466 A1 sind ein System und ein Verfahren zum Verbessern einer Sicherheit von Schiffscontainern offenbart. Ein Prozessor umfasst einen lokalen Zeitgeber, der zu einem Zeitpunkt eines Versiegelns mit einem Zeitgeber einer externen Überwachungsstation synchronisiert wird. Ein Wert des lokalen Zeitgebers wird ferner in einem mit dem Prozessor gekoppelten Speicher gespeichert. Der Speicher und der Prozessor sind in dem Schiffscontainer angeordnet. Bei einem Erkennen eines Öffnens des Schiffscontainers wird der lokale Zeitgeber zurückgesetzt und dessen Wert in dem Speicher gespeichert. Das Öffnen des Schiffscontainers ist später erkennbar durch eine Abweichung des lokalen Zeitgebers oder des in dem Speicher gespeicherten Werts von einem Wert des Zeitgebers der externen Überwachungsstation.

Ferner ist aus US 4,156,286 A ein Datenaufzeichnungsgerät mit einer externen Stromquelle sowie einer Batterie bekannt.

Die Aufgabe der Erfindung ist, eine Detektionsvorrichtung zu schaffen, durch die das Öffnen eines Gehäuses für zu schützende Komponenten in dem Gehäuse einfach und zuverlässig erkennbar ist.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch eine Detektionsvorrichtung zum sicheren Erkennen eines Öffnens eines Gehäuses. Die Detektionsvorrichtung umfasst einen Datenspeicher, der in dem Gehäuse angeordnet ist. Die Detektionsvorrichtung umfasst ferner eine Kontrolleinheit mit einem nicht flüchtigen Speicher, in dem mindestens ein Referenzdatum gespeichert ist. Die Kontrolleinheit ist in dem Gehäuse angeordnet und mit dem Datenspeicher gekoppelt. Die Kontrolleinheit ist ferner ausgebildet zum Ermitteln mindestens eines Prüfdatums und zum Speichern dieses mindestens einen Prüfdatums in dem Datenspeicher. Die Kontrolleinheit ist ferner ausgebildet zum Lesen des mindestens einen Prüfdatums aus dem Datenspeicher und zum Überprüfen des mindestens einen gelesenen Prüfdatums auf ein Vorhandensein und/oder Unverändertsein abhängig von dem Referenzdatum. Die Kontrolleinheit ist ferner ausgebildet zum Erkennen des Öffnens des Gehäuses, wenn das mindestens eine gelesene Prüfdatum verändert oder nicht vorhanden ist. Die Detektionsvorrichtung umfasst ferner eine Löscheinheit, die mindestens einen Sensoreingang aufweist und die in dem Gehäuse angeordnet ist und die mit dem Datenspeicher gekoppelt ist. Die Löscheinheit ist ausgebildet zum Löschen oder Verändern des mindestens einen Prüfdatums in dem Datenspeicher, wenn an dem Sensoreingang ein durch das Öffnen des Gehäuses verursachtes Öffnungssignal anliegt. Die Detektionsvorrichtung umfasst ferner einen Energiespeicher, der in dem Gehäuse angeordnet ist und der mit der Löscheinheit und mit dem Datenspeicher elektrisch gekoppelt ist.

Die Detektionsvorrichtung ist insbesondere Teil eines in einem Fahrzeug angeordneten Geräts, das zu schützende Informationen speichert und/oder erzeugt. Die Detektionsvorrichtung ist insbesondere Teil eines Tachographen und insbesondere Teil eines digitalen Tachographen, einer Mauterfassungseinheit, die auch als "On-Board-Unit" bezeichnet werden kann, oder eines Instruments, zum Beispiel für eine Kilometerstandserfassung und/oder -anzeige. Durch das Gehäuse, das die zu schützenden Komponenten und Informationen umschließt, zum Beispiel Komponenten des Tachographen, der Mauterfassungseinheit oder des Instruments, sind diese Komponenten vor einem mechanischen Zugriff geschützt, solange das Gehäuse geschlossen und unbeschädigt bleibt. Durch die Detektionsvorrichtung ist das Öffnen des Gehäuses und somit eine potentielle unbefugte Manipulation einfach und zuverlässig erkennbar.

Die Kontrolleinheit ist beispielsweise auch eine Steuereinheit für ein Steuern von Funktionen des Geräts, also zum Beispiel des Tachographen, der Mauterfassungseinheit oder des Instruments. Der Energiespeicher ermöglicht den Betrieb der Löscheinheit und des Datenspeichers auch dann, wenn der Betrieb der Kontrolleinheit nicht möglich ist, zum Beispiel weil eine extern zu dem Gehäuse angeordnete Energiequelle abgeklemmt oder abgeschaltet ist. Das Prüfdatum kann dadurch unabhängig von der Kontrolleinheit gelöscht oder verändert werden und so das Öffnen des Gehäuses zuverlässig anzeigen. Die Kontrolleinheit kann dann das Öffnen des Gehäuses durch Lesen und Überprüfen des Prüfdatums bei Wiederaufnahme ihres Betriebs einfach erkennen.

Die Löscheinheit und der Datenspeicher können sehr einfach ausgebildet sein. Beispielsweise kann der Datenspeicher als ein Register ausgebildet sein für das Speichern des mindestens einen Prüfdatums. Weitere Daten müssen nicht in dem Datenspeicher speicherbar sein. Durch die Einfachheit der Löscheinheit und des Datenspeichers können diese sehr einfach so ausgebildet werden, dass diese nur sehr wenig elektrische Energie für ihren Betrieb benötigen. Insbesondere benötigen die Löscheinheit und der Datenspeicher weniger elektrische Energie als die Kontrolleinheit, so dass die Löscheinheit und der Datenspeicher einfach und dauerhaft durch den Energiespeicher betreibbar sind, zum Beispiel über mehrere Monate oder Jahre, auch wenn keine externe Energiequelle zur Verfügung steht. Entsprechend ist auch dauerhaft das Öffnen des Gehäuses zuverlässig erkennbar, auch wenn für eine lange Zeitdauer keine externe Energiequelle zur Verfügung steht.

Das Öffnungssignal ist beispielsweise sehr einfach durch einen mechanischen Gehäuseschalter erzeugbar, der seinen Schaltzustand bei dem Öffnen des Gehäuses ändert. Das Öffnungssignal kann jedoch ebenso anders erzeugt werden.

Ferner kann die Detektionsvorrichtung sehr einfach reversibel ausgebildet werden, das heißt, das Prüfdatum kann gegebenenfalls nach einer Authentisierung neu in dem Datenspeicher gespeichert werden. Das Gehäuse muss insbesondere nicht neu versiegelt werden.

In einer vorteilhaften Ausgestaltung weisen das mindestens eine Referenzdatum und das ermittelte mindestens eine Prüfdatum einen gleichen Wert auf. Alternativ ist das mindestens eine Prüfdatum abhängig von dem mindestens einen Referenzdatum ermittelbar. Die Detektionsvorrichtung ist für das Erkennen des Öffnens des Gehäuses ausgebildet zum Vergleichen des mindestens einen gelesenen Prüfdatums mit dem mindestens einen Referenzdatum oder mit mindestens einem abhängig von dem mindestens einen Referenzdatum ermittelten Vergleichsdatum. Der Vorteil ist, dass das Öffnen des Gehäuses sehr einfach und zuverlässig durch Vergleich des mindestens einen gelesenen Prüfdatums mit dem mindestens einen Referenzdatum oder dem mindestens einen Vergleichsdatum möglich ist.

In einer weiteren vorteilhaften Ausgestaltung umfasst das mindestens eine Referenzdatum mindestens einen geheimen Schlüssel. Die Kontrolleinheit ist ausgebildet zum Ermitteln des mindestens einen Prüfdatums abhängig von dem mindestens einen geheimen Schlüssel. Dies hat den Vorteil, dass dadurch eine hohe Sicherheit möglich ist. Das Prüfdatum ist nur mit Kenntnis des mindestens einen geheimen Schlüssels ermittelbar. Dadurch ist ein Rekonstruieren des mindestens einen Prüfdatums durch einen Angreifer erschwert, wenn dieser den geheimen Schlüssel nicht kennt.

In einer weiteren vorteilhaften Ausgestaltung ist die Kontrolleinheit ausgebildet zum Erzeugen jeweils mindestens eines neuen Prüfdatums nach Ablauf einer vorgegebenen Zeitdauer und/oder bei Auftreten mindestens eines vorgegebenen Ereignisses und zum Speichern dieses jeweils mindestens einen Prüfdatums in dem Datenspeicher. Der Vorteil ist, dass dadurch jedes Prüfdatum nur eine begrenzte Gültigkeitsdauer hat. Sollte es einem Angreifer gelingen, ein zu einem Zeitpunkt gültiges Prüfdatum in Erfahrung zu bringen, kann dieses nicht für einen Angriff zu einem späteren Zeitpunkt genutzt werden. Dadurch ist ein hoher Schutz möglich, insbesondere gegenüber Wiedereinspielangriffen, die auch als Replay-Angriffe bezeichnet werden.

In diesem Zusammenhang ist es vorteilhaft, wenn die Kontrolleinheit ausgebildet ist zum Ermitteln des jeweils mindestens einen Prüfdatums abhängig von einem Zufallswert oder zum Ermitteln des jeweils mindestens einen Prüfdatums als einen Zufallswert. Dies hat den Vorteil, dass die neu erzeugten Prüfdaten nicht aus zuvor gültigen Prüfdaten ableitbar und daher nicht vorhersagbar sind. Dadurch ist ein besonders hoher Schutz möglich, insbesondere gegenüber Wiedereinspielangriffen.

In einer weiteren vorteilhaften Ausgestaltung ist die Kontrolleinheit ausgebildet zum Lesen des mindestens einen Prüfdatums aus dem Datenspeicher und zum Überprüfen des mindestens einen Prüfdatums jeweils nach Ablauf einer vorgegebenen Zeitdauer und/oder bei Auftreten mindestens eines vorgegebenen Ereignisses. Der Vorteil ist, dass das Öffnen des Gehäuses so sicher erkannt und gegebenenfalls protokolliert werden kann. Durch mehrfaches, zeitlich voneinander beabstandetes und gegebenenfalls periodisches Lesen und Überprüfen des Prüfdatums wird eine unbefugte Manipulation erschwert.

In einer weiteren vorteilhaften Ausgestaltung ist die Kontrolleinheit mechanisch und/oder elektrisch vor unbefugter Manipulation geschützt ausgebildet. Ferner sind der Datenspeicher und die Löscheinheit separat von der Kontrolleinheit ausgebildet. Der Datenspeicher und die Löscheinheit müssen zusätzlich zu dem Schutz, den das Gehäuse bietet, nicht vor unbefugter Manipulation geschützt sein. Dadurch ist die Detektionsvorrichtung einfach und mit geringen Kosten implementierbar.

Durch den mechanischen und/oder elektrischen Schutz kann die Kontrolleinheit hohe Sicherheitsanforderungen erfüllen. Dadurch sind das Referenzdatum und das Ermitteln und Überprüfen des Prüfdatums gut geschützt vor unbefugter Manipulation. Die Kontrolleinheit ist beispielsweise als ein gesicherter Mikrokontroller ausgebildet, der zum Beispiel auch auf einer Chipkarte angeordnet sein kann. Beispielsweise erfüllt die Kontrolleinheit Sicherheitskriterien gemäß den "Common Criteria for Information Technology Security Evaluation" oder "Information Technology Security Evaluation Criteria", oder kurz: ITSEC, oder ähnlichen Richtlinien oder Standards. Eine solche Kontrolleinheit verfügt im Allgemeinen nicht über die Möglichkeit, unabhängig von der externen Energiequelle dauerhaft mit geringem Energieverbrauch das Öffnen des Gehäuses zu erfassen. Durch Vorsehen der Detektionsvorrichtung kann die Kontrolleinheit jedoch zuverlässig und sicher über das Öffnen des Gehäuses informiert werden, auch wenn die Kontrolleinheit selbst zu dem Zeitpunkt des Öffnens nicht in Betrieb war.

In einer weiteren vorteilhaften Ausgestaltung sind der Datenspeicher und die Löscheinheit gemeinsam mit einer Echtzeituhr in Form eines Mikrocontrollers ausgebildet. Der Vorteil ist, dass der für einen Betrieb der Echtzeituhr ohnehin erforderliche Energiespeicher auch für den Betrieb des Datenspeichers und der Löscheinheit genutzt werden kann. Ferner ist die Detektionsvorrichtung so besonders einfach und kostengünstig, falls die Echtzeituhr ohnehin vorgesehen ist. Dadurch erfordert die Detektionsvorrichtung gegebenenfalls keine zusätzlichen Bauelemente. Ferner kann ein solcher Mikrokontroller einen sehr geringen Energiebedarf aufweisen und so einen dauerhaften und zuverlässigen Betrieb der Echtzeituhr, des Datenspeichers und der Löscheinheit ermöglichen, zum Beispiel über einen Zeitraum von etwa zehn Jahren.

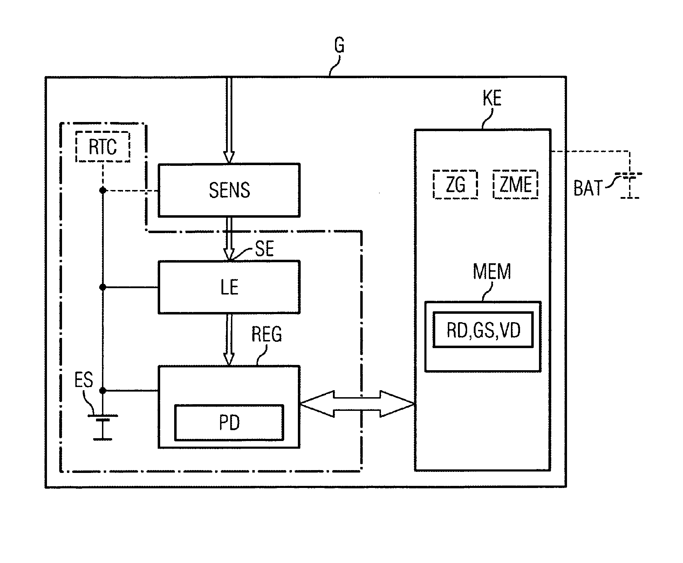

Ausführungsbeispiele der Erfindung sind im Folgenden anhand der schematischen Zeichnung erläutert. Die einzige Figur zeigt ein Gerät mit einem Gehäuse G, insbesondere ein Gerät für eine Anordnung in einem Fahrzeug. Das Gerät ist beispielsweise ein digitaler Tachograph, eine Mauterfassungseinheit oder ein Instrument, zum Beispiel für das Erfassen und/oder Anzeigen eines Kilometerstands des Fahrzeugs. Das Gerät umfasst eine Detektionsvorrichtung zum sicheren Erkennen eines Öffnens des Gehäuses G. Das Gehäuse G umschließt Komponenten des Geräts und umschließt insbesondere zu schützende Komponenten des Geräts.

Die zu schützenden Komponenten des Geräts umfassen beispielsweise einen Speicher, in dem Daten wie zum Beispiel aktuelle Fahrerdaten, Fahrzeugdaten, Zulassungs- und Identitätsdaten, Fahrdaten oder ein aktueller Kilometerstand oder mautrelevante Daten gespeichert sind. Die zu schützenden Komponenten können auch beispielsweise eine Echtzeituhr RTC umfassen, die zu schützende Daten wie Datum und/oder Uhrzeit erzeugt und/oder speichert. Es können jedoch ebenso andere Komponenten und/oder Daten und/oder Funktionen in dem Gehäuse G vor unbefugten Manipulationen zu schützen sein.

Für den Betrieb des Geräts ist im Allgemeinen eine externe Energiequelle BAT erforderlich, die außerhalb des Gehäuses G angeordnet und elektrisch mit dem Gerät koppelbar ist. Die externe Energiequelle BAT stellt die für den Betrieb des Geräts erforderliche Energie zur Verfügung. Die externe Energiequelle BAT ist beispielsweise als eine Fahrzeugbatterie ausgebildet. Die externe Energiequelle BAT kann jedoch auch anders ausgebildet sein.

Die Detektionsvorrichtung ist innerhalb des Gehäuses G angeordnet und umfasst einen Datenspeicher REG, eine Löscheinheit LE, einen Energiespeicher ES und eine Kontrolleinheit KE. Ferner umfasst das Gerät mindestens einen Sensor SENS, der ausgebildet und angeordnet ist zum Erfassen eines Öffnungszustands des Gehäuses G.

Der Sensor SENS ist beispielsweise als ein mechanischer Gehäuseschalter ausgebildet. Beim Öffnen des Gehäuses ändert sich ein Schaltzustand des Gehäuseschalters, wodurch ein elektrischer Stromkreis entweder geöffnet oder geschlossen wird und dadurch ein Öffnungssignal gebildet wird. Beispielsweise drückt im geschlossenen Zustand des Gehäuses ein Gehäusevorsprung oder eine Wandung eines Gehäuseteils auf den Gehäuseschalter, in dem geöffneten Zustand des Gehäuses jedoch nicht. Der Sensor SENS kann jedoch beispielsweise auch elektrisch ausgebildet sein, das heißt durch Öffnen des Gehäuses wird zum Beispiel ein Stromkreis unterbrochen, der das Gehäuse als elektrischen Leiter umfasst. Ferner kann der Sensor SENS beispielsweise auch elektro-optisch ausgebildet sein und zum Beispiel eine Lichtschranke oder mehrere Lichtschranken umfassen, die abhängig von dem Öffnungszustand das Gehäuses das Öffnungssignal erzeugen. Der Sensor SENS kann jedoch auch anders ausgebildet sein, zum Beispiel elektro-akustisch unter Nutzung von Ultraschall.

Der Energiespeicher ES ist beispielsweise als eine Batterie, als ein Akkumulator oder als ein Kondensator ausgebildet. Der Energiespeicher ES ist mit dem Datenspeicher REG und mit der Löscheinheit LE elektrisch gekoppelt und versorgt diese mit elektrischer Energie unabhängig von der externen Energiequelle BAT. Gegebenenfalls ist der Energiespeicher ES auch mit dem Sensor SENS elektrisch gekoppelt.

Der Datenspeicher REG ist bevorzugt als ein Register ausgebildet. Der Datenspeicher REG kann jedoch anders ausgebildet sein. Der Datenspeicher REG ist vorgesehen für das Speichern mindestens eines Prüfdatums PD. Der Datenspeicher REG muss nicht dazu ausgebildet sein, auch andere Daten als das mindestens eine Prüfdatum PD zu speichern.

Die Löscheinheit LE ist ausgangsseitig mit dem Datenspeicher REG gekoppelt. Die Löscheinheit LE weist einen Sensoreingang SE auf, der mit dem Sensor SENS gekoppelt ist und dem durch den Sensor SENS das Öffnungssignal zuführbar ist. Es können auch mehrere Sensoreingänge SE und/oder mehrere Sensoren SENS vorgesehen sein, die entsprechend gekoppelt sind. Die Löscheinheit LE ist ausgebildet zum Löschen oder Verändern des mindestens einen Prüfdatums PD in dem Datenspeicher REG abhängig von dem Öffnungssignal. Erfasst der Sensor SENS das Öffnen des Gehäuses G, dann wird der Löscheinheit LE das Öffnungssignal zugeführt und die Löscheinheit LE löscht oder verändert das mindestens eine Prüfdatum PD in dem Datenspeicher REG.

Die Kontrolleinheit KE umfasst einen nicht flüchtigen Speicher MEM und ist mit dem Datenspeicher REG gekoppelt. Die Kontrolleinheit KE ist ausgebildet zum Ermitteln des Prüfdatums PD und zum Schreiben des Prüfdatums PD in den Datenspeicher REG. In dem nicht flüchtigen Speicher MEM ist mindestens ein Referenzdatum RD gespeichert. Das mindestens eine Referenzdatum RD kann gleich dem mindestens einen Prüfdatum PD sein, oder anders ausgedrückt, das mindestens eine Referenzdatum RD und das mindestens eine Prüfdatum PD können einen gleichen Wert aufweisen. Es kann jedoch auch vorgesehen sein, dass das mindestens eine Prüfdatum PD abhängig von dem mindestens einen Referenzdatum RD ermittelbar ist. Beispielsweise ist das mindestens eine Prüfdatum PD durch Anwenden einer vorgegebenen Rechenvorschrift aus dem mindestens einen Referenzdatum RD ermittelbar.

Bevorzugt umfasst das mindestens eine Referenzdatum RD mindestens einen geheimen Schlüssel GS. Ferner ist die Kontrolleinheit KE bevorzugt ausgebildet, das Prüfdatum PD abhängig von dem mindestens einen geheimen Schlüssel GS zu ermitteln, zum Beispiel als kryptographische Prüfsumme. Besonders bevorzugt umfasst die Kontrolleinheit KE einen Zufallsgenerator ZG zum Erzeugen von Zufallswerten und ist die Kontrolleinheit KE ausgebildet, das mindestens eine Prüfdatum PD alternativ oder zusätzlich abhängig von mindestens einem der Zufallswerte zu ermitteln.

Die Kontrolleinheit KE weist ferner bevorzugt eine Zeitmesseinheit ZME auf zum Vorgeben eines vorgegebenen Prüfintervalls, das heißt einer vorgegebenen Zeitdauer, nach deren jeweiligem Ablauf das Prüfdatum PD, das in dem Datenspeicher REG gespeichert wurde, überprüft werden soll. Das vorgegebene Prüfintervall oder die vorgegebene Zeitdauer betragen beispielsweise wenige Minuten, zum Beispiel fünf oder zehn Minuten. Das vorgegebene Prüfintervall oder die vorgegebene Zeitdauer können jedoch auch kürzer oder länger vorgegeben sein.

Alternativ oder zusätzlich kann das Überprüfen des mindestens einen Prüfdatums PD jedoch auch bei Auftreten mindestens eines vorgegebenen Ereignisses erfolgen. Solche vorgegebenen Ereignisse umfassen beispielsweise einen Start des Geräts und eine dadurch ausgelöste Initialisierung, ein Rücksetzen des Geräts, ein Start des Fahrzeugs, zum Beispiel durch Drehen eines Zündschlüssels, oder andere Ereignisse, die in dem Gerät oder extern zu dem Gerät auftreten.

Ferner ist die Kontrolleinheit KE vorzugsweise ausgebildet, das mindestens eine Prüfdatum PD nach Ablauf der vorgegebenen Zeitdauer oder bei Auftreten des mindestens einen vorgegebenen Ereignisses neu zu ermitteln und in dem Datenspeicher REG und gegebenenfalls auch als Referenzdatum RD in dem nicht flüchtigen Speicher MEM zu speichern. Die vorgegebene Zeitdauer und/oder die vorgegebenen Ereignisse, die für das Neuermitteln des mindestens einen Prüfdatums PD vorgegeben sind, können gleich der vorgegebenen Zeitdauer beziehungsweise gleich den vorgegebenen Ereignissen sein, die für das Überprüfen des mindestens einen Prüfdatums PD vorgegeben sind, sie können jedoch auch anders vorgegeben sein. Bevorzugt ist die Kontrolleinheit KE ausgebildet, das jeweils mindestens eine Prüfdatum PD zufällig oder zumindest nicht vorhersagbar neu zu ermitteln, so dass jedes mindestens eine Prüfdatum PD nur eine begrenzte Gültigkeitsdauer aufweist.

Bei dem Überprüfen des mindestens einen Prüfdatums PD liest die Kontrolleinheit KE das mindestens eine Prüfdatum PD aus dem Datenspeicher REG, falls dieses nicht gelöscht wurde. Falls das mindestens eine Prüfdatum PD aus dem Datenspeicher REG gelöscht wurde, erkennt die Kontrolleinheit KE, dass das Gehäuse G geöffnet wurde. Kann die Kontrolleinheit KE jedoch das mindestens eine Prüfdatum PD erfolgreich aus dem Datenspeicher REG lesen, wird dieses auf Veränderung überprüft. Dazu wird das mindestens eine gelesene Prüfdatum PD mit dem mindestens einen Referenzdatum RD oder mit mindestens einem abhängig von dem Referenzdatum RD ermittelten Vergleichsdatum VD verglichen. Das Überprüfen kann jedoch auch anders erfolgen.

Allgemein wird bei dem Überprüfen überprüft, ob das mindestens eine gelesene Prüfdatum PD mit demjenigen mindestens einen Prüfdatum PD übereinstimmt, das zuvor durch die Kontrolleinheit KE in dem Datenspeicher REG gespeichert wurde. Ist dies der Fall, dann wurde das mindestens eine Prüfdatum PD nicht durch die Löscheinheit LE aus dem Datenspeicher REG gelöscht oder durch die Löscheinheit LE geändert. Dadurch wird erkannt, dass das Gehäuse G nicht geöffnet wurde. Ist das mindestens eine Prüfdatum PD jedoch gelöscht oder verändert, dann wird das Öffnen des Gehäuses G erkannt. Bevorzugt protokolliert die Kontrolleinheit KE das erkannte Öffnen des Gehäuses G. Dadurch ist es beispielsweise möglich, zwischen einem Zeitraum vor und nach dem Öffnen des Gehäuses G zu unterscheiden. Beispielsweise kann in einem Tachographen so die Vertrauenswürdigkeit aller Daten, die vor dem Öffnen des Gehäuses G aufgezeichnet wurden, erhalten bleiben. Nur die nach dem Öffnen des Gehäuses G aufgezeichneten Daten sind dann nicht mehr vertrauenswürdig, zum Beispiel weil nicht ausgeschlossen werden kann, dass das Datum und/oder die Uhrzeit der Echtzeituhr RTC manipuliert wurden.

Nachdem das Öffnen des Gehäuses G erkannt wurde, ist die Vertrauenswürdigkeit von Komponenten, Daten und/oder Funktionen des Geräts nachfolgend beeinträchtigt. Die Vertrauenswürdigkeit kann jedoch beispielsweise nach einer Überprüfung des Geräts wieder hergestellt werden. Dazu kann beispielsweise vorgesehen sein, dass die Kontrolleinheit KE nach einer Authentisierung, zum Beispiel durch Eingabe eines vorgegebenen Kodes oder durch Nutzen einer speziellen Chipkarte, zum Beispiel einer Werkstattkarte, ihre Funktion einschließlich dem Ermitteln, Speichern, Lesen und Überprüfen des mindestens einen Prüfdatums PD wieder aufnimmt, wenn das Gehäuse G wieder geschlossen ist. Die Detektionsvorrichtung ist somit reversibel ausgebildet.

Bevorzugt ist die Kontrolleinheit KE auch als Steuereinheit zum Steuern von Funktionen des Geräts ausgebildet. Ferner ist die Kontrolleinheit KE vorzugsweise eigensicher ausgebildet, das heißt mechanisch und/oder elektrisch vor unbefugter Manipulation geschützt. Beispielsweise ist die Kontrolleinheit KE als Sicherheitsmikrokontroller ausgebildet mit hohem Sicherheitsniveau. Der Datenspeicher REG und die Löscheinheit LE können jedoch separat von der Kontrolleinheit KE in einem im Vergleich zu dem Sicherheitsniveau der Kontrolleinheit KE unsicheren Bereich angeordnet sein, der im Wesentlichen nur durch das Gehäuse G gegen unbefugte Zugriffe geschützt ist. Durch das hohe Sicherheitsniveau der Kontrolleinheit KE ist jedoch das mindestens eine Referenzdatum RD und insbesondere der mindestens eine geheime Schlüssel GS in dem nicht flüchtigen Speicher MEM besonders gut geschützt. Ein Angreifer kann dadurch nach dem Öffnen des Gehäuses G das mindestens eine Prüfdatum PD, das bei dem Öffnen des Gehäuses G in dem Datenspeicher REG gelöscht oder verändert wurde, nicht oder nur mit großen Aufwand rekonstruieren. Das erforderliche Sicherheitsniveau ist abhängig von der jeweiligen Anwendung.

Bevorzugt sind der Datenspeicher REG und die Löscheinheit LE und gegebenenfalls auch der Energiespeicher ES und/oder der Sensor SENS gemeinsam in einem Mikrokontroller ausgebildet. Besonders bevorzugt sind diese gemeinsam mit der Echtzeituhr RTC ausgebildet.

## Patentansprüche

1. Detektionsvorrichtung zum sicheren Erkennen eines Öffnens eines Gehäuses (G), die umfasst
- einen Datenspeicher (REG), der in dem Gehäuse (G) angeordnet ist,
- eine Kontrolleinheit (KE) mit einem nicht flüchtige Speicher (MEM), in dem mindestens ein Referenzdatum (RD) gespeichert ist, wobei die Kontrolleinheit (KE) in dem Gehäuse (G) angeordnet ist und mit dem Datenspeicher (REG) gekoppelt ist und ausgebildet ist zum Ermitteln mindestens eines Prüfdatums (PD) und zum Speichern dieses mindestens einen Prüfdatums (PD) in dem Datenspeicher (REG) und zum Lesen des mindestens einen Prüfdatums (PD) aus dem Datenspeicher (REG) und zum Überprüfen des mindestens einen gelesenen Prüfdatums (PD) auf ein Vorhandensein und/oder Unverändertsein abhängig von dem Referenzdatum (RD) und zum Erkennen des Öffnens des Gehäuses (G), wenn das mindestens eine gelesene Prüfdatum (PD) verändert oder nicht vorhanden ist,
- eine Löscheinheit (LE), die mindestens einen Sensoreingang (SE) aufweist und die in dem Gehäuse (G) angeordnet ist und die mit dem Datenspeicher (REG) gekoppelt ist und die ausgebildet ist zum Löschen oder Verändern des mindestens einen Prüfdatums (PD) in dem Datenspeicher (REG), wenn an dem Sensoreingang (SE) ein durch das Öffnen des Gehäuses (G) verursachtes Öffnungssignal anliegt, und
- einen Energiespeicher (ES), der in dem Gehäuse (G) angeordnet ist und der mit der Löscheinheit (LE) und mit dem Datenspeicher (REG) elektrisch gekoppelt ist,
- wobei der Energiespeicher (ES) den Betrieb der Löscheinheit (LE) und des Datenspeichers (REG) auch dann ermöglicht, wenn der Betrieb der Kontrolleinheit (KE) nicht möglich ist, weil eine extern zu dem Gehäuse (G) angeordnete Energiequelle (BAT) abgeklemmt oder abgeschaltet ist, und
- wobei die Kontrolleinheit (KE) ausgebildet ist zum Erzeugen jeweils mindestens eines neuen Prüfdatums (PD) nach Ablauf einer vorgegebenen Zeitdauer und/oder bei Auftreten mindestens eines vorgegebenen Ereignisses und zum Speichern dieses jeweils mindestens einen Prüfdatums (PD) in dem Datenspeicher (REG).

2. Detektionsvorrichtung nach Anspruch 1, bei der die Kontrolleinheit (KE) ausgebildet ist zum Ermitteln des jeweils mindestens einen Prüfdatums (PD) abhängig von einem Zufallswert oder zum Ermitteln des jeweils mindestens einen Prüfdatums (PD) als einen Zufallswert.

3. Detektionsvorrichtung nach einem der vorstehenden Ansprüche, bei der das mindestens eine Referenzdatum (RD) und das ermittelte mindestens eine Prüfdatum (PD) einen gleichen Wert aufweisen oder das mindestens eine Prüfdatum (PD) abhängig von dem mindestens einen Referenzdatum (RD) ermittelbar ist und die für das Erkennen des Öffnens des Gehäuses (G) ausgebildet ist zum Vergleichen des mindestens einen gelesenen Prüfdatums (PD) mit dem mindestens einen Referenzdatum (RD) oder mit mindestens einem abhängig von dem mindestens einen Referenzdatum (RD) ermittelten Vergleichsdatum (VD).

4. Detektionsvorrichtung nach einem der vorstehenden Ansprüche, bei der das mindestens eine Referenzdatum (RD) mindestens einen geheimen Schlüssel (GS) umfasst und die Kontrolleinheit (KE) ausgebildet ist zum Ermitteln des mindestens einen Prüfdatums (PD) abhängig von dem mindestens einen geheimen Schlüssel (GS).

5. Detektionsvorrichtung nach einem der vorstehenden Ansprüche, bei der die Kontrolleinheit (KE) ausgebildet ist zum Lesen des mindestens einen Prüfdatums (PD) aus dem Datenspeicher (REG) und zum Überprüfen des mindestens einen Prüfdatums (PD) jeweils nach Ablauf einer vorgegebenen Zeitdauer und/oder bei Auftreten mindestens eines vorgegebenen Ereignisses.

6. Detektionsvorrichtung nach einem der vorstehenden Ansprüche, bei der die Kontrolleinheit (KE) mechanisch und/oder elektrisch vor unbefugter Manipulation geschützt ausgebildet ist und der Datenspeicher (REG) und die Löscheinheit (LE) separat von der Kontrolleinheit (KE) ausgebildet sind.

7. Detektionsvorrichtung nach einem der vorstehenden Ansprüche, bei der der Datenspeicher (REG) und die Löscheinheit (LE) gemeinsam mit einer Echtzeituhr (RTC) in Form eines Mikrocontrollers ausgebildet sind.

## Claims

1. Detection device for the secure detection of an opening of a housing (G), comprising
- a data memory (REG), which is arranged in the housing (G),
- a verification unit (KE) with a non-volatile memory (MEM), in which at least one reference date (RD) is stored, wherein the verification unit (KE) is arranged in the housing (G) and is coupled to the data memory (REG) and is designed for determining at least one check date (PD) and for storing this at least one check date (PD) in the data memory (REG) and for reading the at least one check date (PD) from the data memory (REG) and for checking the at least one read check date (PD) for a presence and/or unchanged state dependent on the reference date (RD) and for detecting the opening of the housing (G) when the at least one read check date (PD) is changed or not present,
- a deletion unit (LE), comprising at least one sensor input (SE) and which is arranged in the housing (G) and which is coupled to the data memory (REG) and which is designed for deleting or changing the at least one check date (PD) in the data memory (REG), when an opening signal caused through the opening of the housing (G) is present on the sensor input (SE), and
- an energy storage unit (ES), which is arranged in the housing (G) and which is electrically coupled to the deletion unit (LE) and to the data memory (REG),
- wherein the energy storage unit (ES) makes possible the operation of the deletion unit (LE) and of the data memory (REG) even when the operation of the verification unit (KE) is not possible because an energy source (BAT) arranged externally to the housing (G) is disconnected or switched off, and
- wherein the verification unit (KE) is designed for generating in each case at least one new check date (PD) following the expiration of a predetermined period of time and/or upon the occurrence of at least one predetermined event and for storing this at least one check date (PD) each in the data memory (REG).

2. Detection device according to Claim 1, wherein the verification unit (KE) is designed for determining the respective at least one check date (PD) dependent on a random value or for determining the at least one check date (PD) each as a random value.

3. Detection device according to any one of the preceding claims, wherein the at least one reference date (RD) and the determined at least one check date (PD) have a same value or the at least one check date (PD) can be determined dependent on the at least one reference date (RD) and which is designed for detecting the opening of the housing (G) for comparing the at least one read check date (PD) with the at least one reference date (RD) or with at least one comparison date (VD) determined dependent on the at least one reference date (RD).

4. Detection device according to any one of the preceding Claims, wherein the at least one reference date (RD) comprises at least one secret key (GS) and the verification unit (KE) is designed for determining the at least one check date (PD) dependent on the at least one secret key (GS).

5. Detection device according to any one of the preceding Claims, wherein the verification unit (KE) is designed for reading the at least one check date (PD) from the data memory (REG) and for checking the at least one check date (PD) in each case following the expiration of a predetermined period of time and/or upon the occurrence of at least one predetermined event.

6. Detection device according to any one of the preceding Claims, wherein the verification unit (KE) is designed protected mechanically and/or electrically from unauthorized manipulation and the data memory (REG) and the deletion unit (LE) are designed separately from the verification unit (KE).

7. Detection device according to any one of the preceding Claims, wherein the data memory (REG) and the deletion unit (LE) are jointly designed with a real-time clock (RTC) in the form of a micro-controller.

## Revendications

1. Dispositif de détection pour reconnaître de manière sûre une ouverture d'un boîtier (G), qui comprend
- une mémoire (REG) de données, qui est placée dans le boîtier (G),
- une unité (KE) de contrôle ayant une mémoire (MEM) rémanente, dans laquelle est mémorisée au moins une donnée (RD) de référence, l'unité (KE) de contrôle étant placée dans le boîtier (G) et étant couplée à la mémoire (REG) de données et étant constituée pour la détermination d'au moins une donnée (PD) de contrôle et pour la mémorisation de cette au moins une donnée (PD) de contrôle dans la mémoire (REG) de données et pour lire la au moins une donnée (PD) de contrôle dans la mémoire (REG) de données et pour contrôler la au moins une donnée (PD) de contrôle lue sur le point de savoir si elle est présente et/ou si elle n'est pas modifiée en fonction de la donnée (RD) de référence et pour reconnaître l'ouverture du boîtier (G) si la au moins une donnée (PD) de contrôle qui a été lue est modifiée ou n'est pas présente,
- une unité (LE) d'effacement, qui comporte au moins une entrée (SE) de capteur et qui est placée dans le boîtier (G) et qui est couplée à la mémoire (REG) de données et qui est constituée pour effacer ou modifier la au moins une donnée (PD) dans la mémoire (REG) de données, si à l'entrée (SE) du capteur s'applique un signal d'ouverture provoqué par l'ouverture du boîtier (G),
- une source (ES) d'énergie, qui est placée dans le boîtier (G) et qui est couplée électriquement à l'unité (LE) d'effacement et à la mémoire (REG) de données,
- dans lequel la source (ES) d'énergie rend possible le fonctionnement de l'unité (LE) d'effacement et de la mémoire (REG) de données, même si le fonctionnement de l'unité (KE) de contrôle n'est pas possible parce qu'une source (BET) d'énergie disposée extérieurement au boîtier (G) est déconnectée ou débranchée, et
- dans lequel l'unité (KE) de contrôle est constituée pour la production respectivement d'au moins une nouvelle donnée (PD) de contrôle, après expiration d'une donnée prescrite et/ou à l'apparition d'au moins un événement prescrit, et pour la mémorisation de cette au moins une donnée (PD) de contrôle dans la mémoire (REG) de données.

2. Dispositif de détection suivant la revendication 1, dans lequel l'unité (KE) de contrôle est constituée pour la détermination de la au moins une donnée (PD) de contrôle en fonction d'une valeur aléatoire ou pour la détermination de la au moins une donnée (PD) de contrôle sous la forme d'une valeur aléatoire.

3. Dispositif de détection suivant l'une des revendications précédentes, dans lequel la au moins une donnée (RD) de référence et la au moins une donnée (PD) de contrôle déterminée ont une même valeur ou la au moins une donnée (PD) de contrôle peut être déterminée en fonction de la au moins une donnée (RD) de référence et qui, pour la reconnaissance de l'ouverture du boîtier (G), est constitué pour la comparaison de la au moins une donnée (PD) de contrôle lue à la au moins une donnée (RD) de référence ou à la au moins une donnée (VD) de comparaison déterminée en fonction de la au moins une donnée (RD) de référence.

4. Dispositif de détection suivant l'une des revendications précédentes, dans lequel la au moins une donnée (RD) de référence comprend au moins une clé (GS) secrète et l'unité (KE) de contrôle est constituée pour la détermination de la au moins une donnée (PD) de contrôle en fonction de la au moins une clé (GS) secrète.

5. Dispositif de détection suivant l'une des revendications précédentes, dans lequel l'unité (KE) de contrôle est constituée pour la lecture de la au moins une donnée (PD) de contrôle dans la mémoire (REG) de données et pour le contrôle de la au moins une donnée (PD) de contrôle respectivement après expiration d'une donnée prescrite et/ou à l'apparition d'un événement prescrit.

6. Dispositif de détection suivant l'une des revendications précédentes, dans lequel l'unité (KE) de contrôle est constituée de manière à être protégée mécaniquement et/ou électriquement d'une manipulation non autorisée et la mémoire (REG) de données et l'unité (LE) d'effacement sont constituées séparément de l'unité (KE) de contrôle.

7. Dispositif de détection suivant l'une des revendications précédentes, dans lequel la mémoire (REG) de données et l'unité (LE) d'effacement sont constituées conjointement avec une horloge (RTC) en temps réel sous la forme d'un microcontrôleur.
